# EUROPÄISCHE PATENTANMELDUNG

(11) **EP 2 338 837 A1**
(43) Veröffentlichungstag der Anmeldung: **29.06.2011**
(21) Anmeldenummer: 10194186.2
(22) Anmeldetag: 08.12.2010
(51) Int. Cl.: C02F 1/02, C02F 1/72, F24D 17/00, F24J 2/00, C02F 1/32

(54) **Kleinkläranlage mit photokatalytischem Kollektor und Hauswassersystem mit einer derartigen Kleinkläranlage**

(30) Priorität: 23.12.2009 DE 102009059302
(71) Anmelder: Pöhnl, Roland, 95517 Seybothenreuth (DE)
(72) Erfinder: Pöhnl, Roland, 95517 Seybothenreuth (DE)
(74) Vertreter: Schlögl, Markus

(57) **Zusammenfassung**

Die Erfindung betrifft eine Kleinkläranlage (1) für häusliches Abwasser, umfassend einen Pufferspeicher (8) für nicht filtriertes oder grob filtriertes häusliches Abwasser. Die Erfindung ist dadurch gekennzeichnet, dass die Kleinkläranlage (1) einen photokatalytischen Kollektor (10) umfasst, wobei der photokatalytische Kollektor (10) eine oder mehrere photokatalytisch aktiv beschichtete Oberflächen aufweist, an denen das Abwasser vorbei strömt und dabei gereinigt wird.

Die Erfindung betrifft ferner ein Hauswassersystem umfassend eine derartige Kleinkläranlage (1). Bei diesem Hauswassersystem ist der Wasserkreislauf bis auf eine eventuelle Wasserentnahme oder Wassereinbringung an einer oder mehreren hierfür vorgesehenen Verbrauchsstellen (5, 15) im Hauswassersystem geschlossen.

## Beschreibung

Die Erfindung betrifft eine Kleinkläranlage für häusliches Abwasser, umfassend einen Pufferspeicher für nicht filtriertes oder grob filtriertes häusliches Abwasser. Die Erfindung betrifft ferner ein Hauswassersystem mit einer derartigen Kleinkläranlage.

Die moderne Zivilisation bringt einen steigenden Bedarf an Insellösungen für die Wasserversorgung und die Abwasserentsorgung mit sich. Dies gilt nicht nur für spezielle Lagen abseits von Ballungsgebieten in Industrieländern, sondern in stark steigendem Maße auch für Entwicklungsländer, aufgrund der Urbanisierung, d.h. der Ausbreitung städtischer Lebensformen in ländliche Gebiete. Insbesondere für Entwicklungsländer, abseits der dortigen Ballungszentren, muss die Schaffung hygienischer Zustände nach dem heutigen Stand der Technik vorangetrieben werden. Aber auch in Industrieländern besteht in vielen Bereichen Verbesserungsbedarf.

Die Insellösungen müssen im kleinen Maßstab die Wasserversorgung und die Abwasserentsorgung der Ver- und Entsorger in Ballungsgebieten übernehmen. Derartige dezentrale Insellösungen sollten ohne Anschluss an ein öffentliches Wasser- und Abwassersystem und insbesondere auch ohne Anschluss an ein öffentliches Stromnetz funktionieren.

Die Erfindung stellt sich dieser Herausforderung. Ansatzpunkt ist dabei eine Kleinkläranlage. Kleinkläranlagen sind Kläranlagen, die für bis zu 50 Einwohnerwerte ausgelegt sind. Sie kommen üblicherweise dann zum Einsatz, wenn ein Anschluss an eine kommunale Kläranlage nicht möglich ist, beispielsweise bei alleinstehenden Häusern oder Bauernhöfen oder kleinen Siedlungen.

Aufgabe der Erfindung ist es, Kleinkläranlagen für die Nutzung in Insellösungen derart weiter zu entwickeln, dass das gereinigte Wasser für die Wiederverwendung im Haushalt geeignet ist, beispielsweise für die Gartenbewässerung, den Hausputz und die Toilettenspülung, gegebenenfalls auch das Wäschewaschen.

Diese Aufgabe wird hinsichtlich der Kleinkläranlage mit den Merkmalen nach Anspruchs 1 und hinsichtlich des Hauswassersystems mit den Merkmalen nach Anspruch 13 gelöst. Vorteilhafte Ausgestaltungen und Weiterbildungen ergeben sich aus den jeweils abhängigen Ansprüchen.

Die erfindungsgemäße Kleinkläranlage für häusliches Abwasser umfasst einen Pufferspeicher für nicht filtriertes oder grob filtriertes häusliches Abwasser sowie einen photokatalytischen Kollektor. Dieser photokatalytische Kollektor weist eine oder mehrere photokatalytisch aktiv beschichtete Oberflächen auf, an denen Abwasser vorbei strömt und dabei gereinigt wird.

Die grundsätzliche Eignung photokatalytisch beschichteter Oberflächen zur Abwasserreinigung ist bekannt, in Betracht kommt beispielsweise eine TiO₂-Beschichtung. Der Vorteil des Einsatzes derartig beschichteter Oberflächen in einem Kollektor in einer Kleinkläranlage liegt in der direkten Einsetzbarkeit des dabei gereinigten Abwassers in der Wasserversorgung des Haushalts. Ferner wird in dem Kollektor die für die Wirkung der photokatalytisch beschichteten Oberfläche erforderliche elektromagnetische Strahlung, bei der es sich insbesondere um Sonnenstrahlung handelt, in geeigneter Form bereitgestellt. Die elektromagnetische Strahlung dringt durch transparente oder zumindest teiltransparente Flächen in den Kollektor ein, die Energie der Strahlung sorgt für die Wirksamkeit der photokatalytischen Beschichtung, die dadurch das vorbeiströmende Abwasser reinigt. Durch die Strahlung wird ferner das durch den Kollektor strömende Wasser erwärmt. Der photokatalytische Kollektor verbindet somit die Funktionen eines herkömmlichen Kollektors, die Wassererwärmung, mit der Funktion der Reinigung und damit Aufbereitung von Abwasser, bewirkt durch seine photokatalytisch aktive beschichtete Oberfläche, an der das Abwasser vorbeiströmt.

Es sind verschiedene Ausführungsvarianten des Kollektors möglich, die auch miteinander kombiniert werden können.

So kann vorgesehen sein, dass der photokatalytische Kollektor Glas-und/oder Kunststoffröhren umfasst, durch die das Abwasser strömt und deren Innenseite die photokatalytisch aktiv beschichtete Oberfläche ausbildet.

Auch kann vorgesehen sein, dass der photokatalytische Kollektor mindestens eine Glas- und/oder Kunststoffplatte umfasst, die ein Rohr- oder Kanalsystem abdeckt, durch das das Abwasser strömt, wobei die Glas-und/oder Kunststoffplatte Bestandteil des Rohr- oder Kanalsystems ist, und wobei die dem Rohr- oder Kanalsystem zugewandte Innenseite der Glas- und/oder Kunststoffplatte die photokatalytisch aktiv beschichtete Oberfläche ausbildet.

Ferner kann vorgesehen sein, dass der photokatalytische Kollektor ein Rohr- oder Kanalsystem umfasst, durch das das Abwasser strömt, wobei das Rohr- oder Kanalsystem Glas- oder Kunststoffkugeln und/oder Glas-oder Kunststoffsplitter aufweist oder mit diesen gefüllt ist, die die photokatalytisch aktiv beschichtete Oberfläche ausbilden.

Gemäß einer Weiterbildung umfasst der photokatalytische Kollektor, beispielsweise in jeder der vorgenannten Ausführungsvarianten, Spiegelsysteme zur Bündelung und/oder Konzentrierung und/oder Kanalisierung und/oder Lenkung einfallender Strahlung, insbesondere Licht- bzw. Sonnenstrahlung. Dadurch wird die Effizienz des Kollektors erheblich gesteigert.

Zweckmäßig ist der modulare Aufbau des photokatalytischen Kollektors aus einem oder mehreren Kollektormodulen, die jeweils eine Trägerplatte aufweisen, auf der der alle weiteren Kollektorkomponenten befestigt sind. Vorzugsweise sind alle erforderlichen Komponenten des Kollektors auf der Trägerplatte montiert. Diese modulare Auslegung ermöglicht die Anpassung des photokatalytischen Kollektors an unterschiedliche abwassertechnische Anforderungen sowie an räumliche Gegebenheiten. Auch Transport und Montage werden dadurch erleichtert. Der vorgesehene modulare Aufbau ist vergleichbar dem modularen Aufbau einer herkömmlichen Solar- oder Photovoltaikanlage. Ferner kann aufgrund des modularen Aufbaus jederzeit die Reinigungsleistung des photokatalytischen Kollektors durch entsprechende Erweiterung an gestiegene Anforderungen angepasst werden. Auch ermöglicht der modulare Aufbau nach einer Außerbetriebnahme des Kollektors oder der Kleinkläranlage die Wiederverwendung der Module beim Aufbau eines anderen photokatalytischen Kollektors.

Gemäß einer Weiterbildung der Erfindung umfasst die Kleinkläranlage zusätzlich mindestens einen Sauberwasserspeicher, insbesondere einen Kaltwasserspeicher und/oder einen Warmwasserspeicher. Dadurch steht für die Hauswasserversorgung auch in Zeiten fehlender Sonnenstrahlung gereinigtes Wasser zur Verfügung, beispielsweise in der Nacht oder an trüben Tagen. Das Volumen des Sauberwasserspeichers sollte an die jeweiligen Bedürfnisse des Haushalts angepasst sein. Zweckmäßig ist auch, wenn zumindest ein Teil des gereinigten Wassers in einem thermisch isolierten Warmwasserspeicher gespeichert wird. Dadurch lässt sich die im Kollektor dem Wasser zugeführte Wärmeenergie für die Warmwasserversorgung nutzen. Besonders zweckmäßig ist das Vorsehen eines normen Wasserspeichers, in dem das Wasser abkühlt, und eines Warmwasserspeichers, in dem das Wasser warm bleibt, da dadurch an den Verbrauchsstellen durch entsprechendes Mischen, wie dies aus der herkömmliches Wasserversorgung bekannt ist, Wasser in der gewünschten Temperatur entnehmbar ist, ohne zusätzliche Heizenergie aufwenden zu müssen.

Eine Variante der Erfindung sieht vor, dass der photokatalytische Kollektor derart angeordnet ist, dass der Fluss des Abwassers durch den photokatalytischen Kollektor eine freie Konvektionsströmung ist, hervorgerufen durch die Erwärmung des in den Kollektor eintretenden, grob filtrierten Abwassers durch in den photokatalytischen Kollektor einfallende elektromagnetische Strahlung, insbesondere Lichtstrahlung (hierunter wird neben sichtbarem Licht auch UV-Strahlung und IR-Strahlung verstanden), vorzugsweise Sonnenstrahlung. Die Konvektion wird hervorgerufen durch die geringere Dichte und damit den Auftrieb des wärmeren Wassers, d.h. durch die Schwerkraft. Diese Variante kommt völlig ohne elektrische Energie aus, ein Anschluss an ein öffentliches Stromnetz ist nicht erforderlich.

Eine weitere, alternative oder auch zusätzliche Variante sieht vor, dass die Kleinkläranlage mindestens eine Zirkulationspumpe umfasst, die derart angeordnet ist, dass die Pumpe bei Betrieb das Abwasser durch den photokatalytischen Kollektor fördert. Zweckmäßigerweise umfasst die Kleinkläranlage in diesem Fall eine Photovoltaikanlage zur Energieversorgung der Zirkulationspumpe, so dass auch in diesem Fall die Kleinkläranlage ohne Anschluss an ein öffentliches Stromnetz auskommt und somit völlig autark als Insellösung arbeiten kann.

Eine Weiterbildung der Erfindung sieht vor, dass die Kleinkläranlage eine Grobstofffiltereinheit umfasst, die dafür sorgt, dass dem photokatalytischen Kollektor grob filtriertes Abwasser zugeführt wird. Beispielsweise kann die Grobfiltereinheit einen oder mehrere Filtersäcke, beispielsweise Jutesäcke, aufweisen. In den Filtersäcken werden Feststoffe zurückgehalten. Durch Verwendung unterschiedlichen Filtersackmaterials kann die gewünschte maximale verbleibende Partikelgröße im Abwasser eingestellt werden.

Die Grobstofffiltereinheit kann grundsätzlich strömungstechnisch vor oder nach dem Pufferspeicher angeordnet sein, zweckmäßig ist jedoch eine Anordnung vor dem Pufferspeicher, da andernfalls absinkende Feststoffe einen großen Sedimentanfall im Pufferspeicher mit sich bringen, und das Sediment muss entsprechend häufig entfernt werden.

Als weitere Komponente der Kleinkläranlage kann ein Thermokomposter zur Verrottung von Feststoffen vorgesehen sein. Diesem Thermokomposter können beispielsweise die aus dem Abwasser mit der Grobstofffiltereinheit ausfiltrierte Feststoffe zugeführt werden. Der Thermokomposter weist eine Warmwasser-Heizeinrichtung auf. Diese ist zweckmäßigerweise derart ausgebildet, dass sie von dem im photokatalytischen Kollektor gereinigten und erwärmten Wasser durchströmt wird, d.h. die Warmwasser-Heizeinrichtung ist an den Rücklauf bzw. Wasserauslass des photokatalytischen Kollektors angeschlossen, gegebenenfalls über die bereits angesprochene Zirkulationspumpe, aber auch die vorgenannte, vom Kollektor ausgehende Konvektionsströmung kann für die erforderliche Wasserströmung durch die Warmwasser-Heizeinrichtung sorgen. Auf diese Weise wird überschüssige Abwärme aus der Abwasserreinigung im Kollektor genutzt für die Beschleunigung des Rotteprozesses im Thermokomposter.

Die vorgenannten Komponenten der Kleinkläranlage bilden strömungstechnisch die zentralen Bestandteile eines im Wesentlichen geschlossenen Wasserkreislaufs. Das häusliche Abwasser wird beispielsweise zunächst der Grobstofffiltereinheit zugeführt, zur Abtrennung der Feststoffe, die anschließend zusammen mit den Filtersäcken dem Thermokomposter zugeführt werden können. Nach der groben Filtrierung wird das Abwasser dem Pufferspeicher, beispielsweise einem Pufferbecken, zugeführt. Die Bedeutung des Pufferspeichers liegt darin, für einen einheitlichen Abwasserstrom durch den Kollektor zu sorgen, damit dieser unabhängig vom tatsächlichen Abwasseranfall unabhängig ist. Abwasserspitzen lassen sich im Pufferspeicher abfangen, in Zeiten geringen Abwasseranfalls wird der Kollektor aus den Vorräten im Pufferspeicher gespeist. Dem Pufferspeicher strömungstechnisch nachgeschaltet ist der photokatalytische Kollektor, der schräg geneigt und mit möglichst optimierter Ausrichtung zur Sonne aufgestellt ist. Durch die Konvektionszirkulation bzw. Schwerkraftzirkulation im Kollektor bzw. alternativ oder additiv durch eine Zirkulationspumpe wird das Abwasser aus dem Pufferspeicher in den Kollektor gefördert und strömt dort an den photokatalytisch aktiv beschichteten Oberflächen vorbei und wird dort bei entsprechender Sonneneinstrahlung aufgrund der an der beschichteten Oberfläche stattfindenden Reaktionen gereinigt. Der Vorteil der freien Konvektionsströmung liegt an der automatischen Regelung der Wasserströmung durch den Kollektor. Bei verhältnismäßig starker Sonnenstrahlung ist die Konvektionsströmung aufgrund der relativ starken Wassererwärmung groß, es strömt eine relativ gesehen größere Wassermenge pro Zeit an der photokatalytisch aktiven Oberflächenbeschichtung vorbei. Diese ist aber aufgrund der verhältnismäßig großen Sonnenstrahlung auch relativ stärker aktiv und damit in der Lage, die größere vorbeiströmende Wassermenge zu reinigen. Ist die Sonnenstrahlung hingegen geringer, fällt auch die Wassererwärmung und damit die Konvektionsströmung schwächer aus, aber parallel reduziert sich auch die Reinigungsleistung der photokatalytisch aktiven Oberfläche, in Übereinstimmung mit der geringeren vorbeiströmenden Wassermenge. Ist keine Sonnenstrahlung mehr vorhanden, beispielsweise nachts, kommt auch die Konvektionsströmung des Wassers durch den Kollektor zum Erliegen.

Auch bei der Zirkulationspumpe lässt sich eine Regelung der Pumpenleistung vorsehen, die zu einem der jeweiligen Strahlungssituation und der sich hieraus ergebenden Reinigungswirkung der photokatalytisch aktiven Oberfläche angepassten Wasservolumenstrom führt.

Das gereinigte Wasser wird nach dem Durchströmen des Kollektors und gegebenenfalls der Zirkulationspumpe einem oder mehreren Sauberwasserspeichern zugeführt. Auf dem Weg dorthin kann das gereinigte und erwärmte Wasser zumindest in einem Teilstrom durch die Warmwasser-Heizeinrichtung des Thermokomposters geführt werden und dort Wärmeenergie abgeben. In diesem Fall ist die Warmwasser-Heizeinrichtung des Thermokomposters in den Wasserkreislauf integriert. Der oder die Sauberwasserspeicher haben die Aufgabe, gereinigtes Wasser in für die jeweils angeschlossenen Verbraucher ausreichender Menge zu speichern, damit auch in Zeiten, in denen der Kollektor aufgrund fehlender Sonnenstrahlung nicht arbeitet, beispielsweise nachts, ausreichend gereinigtes Wasser für die Wasserversorgung zur Verfügung steht und bei Bedarf abgerufen werden kann.

Aus dem Sauberwasserspeicher wird das Abwasser dann Wasserauslassstellen bzw. Verbrauchsstellen zugeführt, an denen es ein Verbraucher benutzen kann, beispielsweise zum Waschen oder zur Toilettenspülung. Das hierbei entstehende Abwasser wird dann wiederum der Grobschmutzfiltereinheit und dem Pufferspeicher zugeführt, wodurch der Kreislauf - bis auf entnommenes Wasser an den Wasserauslassstellen bzw. Verbrauchsstellen - im geschlossenen Kreislauf geführt wird.

Die Erfindung betrifft somit auch ein Hauswassersystem umfassend eine erfindungsgemäße Kleinkläranlage. Bei diesem Hauswassersystem ist der Wasserkreislauf bis auf eine eventuelle Wasserentnahme oder Wassereinbringung an einer oder mehreren hierfür vorgesehenen Verbrauchsstellen im Hauswassersystem geschlossen. Gegebenenfalls kann, wie bereits angesprochen, erwärmtes und gereinigtes Wasser aus dem photokatalytischen Kollektor in einem Warmwasserspeicher gespeichert werden für die Verwendung als Warmwasser an hierfür vorgesehenen Verbrauchsstellen im Hauswassersystem.

In der konkreten Umsetzung des Hauswassersystems bieten sich im Wesentlichen zwei Alternativen:

Die erste Alternative sieht vor, dass eine bereits vorhandene Sanitärstruktur mit integriertem Wasserspülklosett mit der erfindungsgemäßen Kleinkläranlage modernisiert wird. In diesem Fall befinden sich in der Abwassersammelleitung auch Fäkalien und Urin. Diese werden der Grobstofffiltereinheit mit dem Abwasser zugeführt, dort werden die Feststoffe ausgefiltert und können dann dem Thermokomposter zugeführt werden.

In einer zweiten Alternative ist entweder keine Sanitärstruktur vorhanden oder eine vorhandene Sanitärstruktur lässt sich in geeigneter Weise umbauen. In diesem Fall ist es zweckmäßig, bereits direkt beim Abwasseranfall die Stofftrennung vorzunehmen. Bereits bekannte Schwerkrafttoiletten ermöglichen beispielsweise eine getrennte Ableitung von Fäkalien und Urin. Feststoffe können dann direkt der Kompostverwertung zugeführt werden, Urin kann als Mineraldünger gesammelt und landwirtschaftlich verwertet werden. Lediglich Grauwasser, d.h. Abwasser aus den Bereichen Küche, Körperpflege und Waschen, ohne Fäkalien und Urin, wird in diesem Fall der Abwasserreinigung in der erfindungsgemäßen Kleinkläranlage zugeführt und in der bereits beschriebenen Weise behandelt. Im Unterschied zur ersten Alternative werden hier jedoch die Fäkalien bereits beim Anfall abgetrennt und direkt der Kompostierung zugeführt. Urin sowie Braunwasser, beispielsweise aus der Toilette, wird ungereinigt einer landwirtschaftlichen Verwertung zugeführt. Ein zentraler Vorteil liegt somit in der erheblichen Verminderung der organisch abzubauenden Schmutzfracht im Abwasser, das durch den Kollektor strömt. Darüber hinaus kann diese moderne Sanitärstruktur die Akzeptanz der erfindungsgemäßen Kleinkläranlage mit Wiederverwendung des gereinigten Abwassers in der Wasserversorgung deutlich erhöhen, da viele Personen die Verwendung von gereinigtem Abwasser, das ehemals Fäkalien und Urin enthielt, ablehnen. Diese Problematik entfällt bei der zweiten Alternative. Allgemein sei darauf hingewiesen, dass der Begriff Haus bzw. Haushalt vorstehend und nachfolgend sehr weit verstanden wird, es kann sich durchaus auch um ein einheitliches Wassersystem oder die gemeinsame Kleinkläranlage für eine Einheit aus mehreren Haushalten oder Häusern handeln, beispielsweise für eine kleinere Siedlung.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### Dabei zeigen

- FIG 1: ein Ausführungsbeispiel einer erfindungsgemäßen Kleinkläranlage, integriert in ein erfindungsgemäßes Hauswassersystem,
- FIG 2: ein weiteres Ausführungsbeispiel einer erfindungsgemäßen Kleinkläranlage, integriert in ein erfindungsgemäßes Hauswassersystem, und
- FIG 3: nochmals ein weiteres Ausführungsbeispiel einer erfindungsgemäßen Kleinkläranlage, integriert in ein erfindungsgemäßes Hauswassersystem.

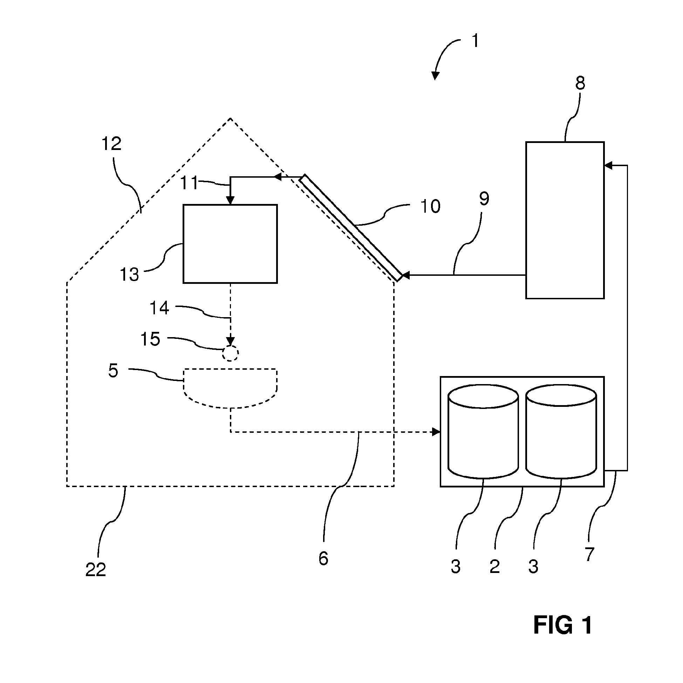

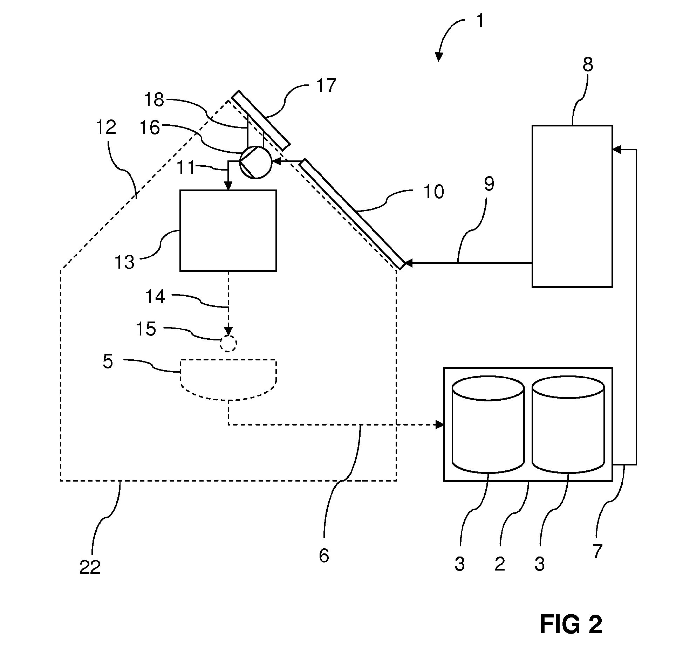

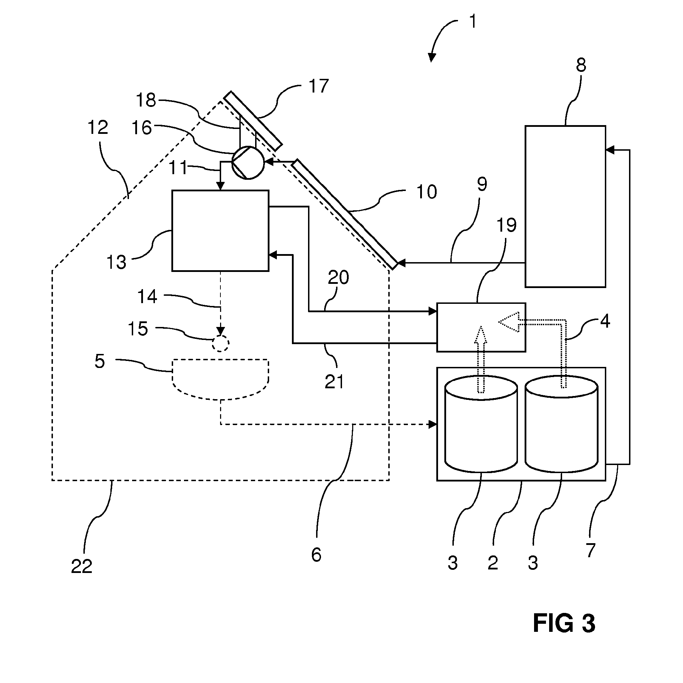

Die Ausführungsbeispiele von FIG 1 bis FIG 3 bauen aufeinander auf, FIG 2 stellt eine Erweiterung gegenüber FIG 1 dar, FIG 3 eine Erweiterung gegenüber FIG 2. Einander entsprechende Teile und Komponenten sind in FIG 1 bis FIG 3 mit den gleichen Bezugszeichen versehen. Die Komponenten der Kleinkläranlage sind jeweils in durchgezogenen Linien dargestellt, die in gestrichelter Linie dargestellten Komponenten verdeutlichen die Anordnung und Funktion der Kleinkläranlage, bis auf das Haus 22 mit seinem Dach 12 gehören sie zusammen mit der Kleinkläranlage zum jeweils dargestellten Ausführungsbeispiel eines erfindungsgemäßen Hauswassersystems.

Das Ausführungsbeispiel einer Kleinkläranlage 1 gemäß FIG 1 umfasst eine Grobstofffiltereinheit 2 mit mehreren Filtersäcken 3, symbolisch sind zwei dargestellt. Das häusliche Abwasser, das von den Verbrauchsstellen, die in den Figuren durch den Wasserauslass 15 und das Waschbecken 5 symbolisiert sind, wird über eine Abwassersammelleitung 6 der Grobstofffiltereinheit 2 zugeführt. In dieser Grobstofffiltereinheit 2 werden Feststoffe aus dem Abwasser gefiltert. Die gewünschte Filterwirkung, d.h. die durchgelassene Partikelgröße, kann durch entsprechende Filter- bzw. Filtermaterialauswahl eingestellt werden. Es können auch mehrere Filter gleicher und/oder unterschiedlicher Filtercharakteristik strömungstechnisch hintereinander geschaltet werden.

Nach der Grobstofffiltereinheit 2 wird das grob gereinigte Abwasser über die Wasserleitung 7 einem Pufferspeicher 8 für das grob filtrierte Abwasser zugeführt. Durch den Pufferspeicher 8 lassen sich Abwasser-Anfallspitzen abfangen, ferner steht auch dann, wenn kein Abwasser anfällt, Wasser aus dem Pufferspeicher 8 für den nachfolgenden Reinigungsprozess zur Verfügung. Dies ist wichtig für die Überbrückung sonnenloser Tageszeiten.

Zentrale Reinigungseinrichtung der erfindungsgemäßen Kleinkläranlage 1 ist ein photokatalytischer Kollektor 10, dem Abwasser aus dem Pufferspeicher 8 über die Wasserleitung 9 zugeführt wird. Der Kollektor 10 ist auf dem Dach 12 eines Hauses 22 montiert, und zwar derartig, dass er möglichst optimal der Sonne bzw. einer geeigneten Lichtquelle bzw. Strahlungsquelle zugewandt ist. Er kann aber ebenso an einer Fassade montiert sein, oder unabhängig von einem Gebäude frei aufgestellt sein. Der Kollektor 10 weist photokatalytisch beschichtete Oberflächen auf, an denen das Abwasser vorbeiströmt und dabei gereinigt wird. Hierzu wird die Sonnenstrahlung bzw. die Lichtstrahlung (hierunter wird neben sichtbarem Licht auch UV-Strahlung oder Infrarotstrahlung verstanden) bzw. allgemein die Strahlung den katalytisch beschichteten Oberflächen zugeführt, beispielsweise gebündelt und/oder konzentriert und/oder gelenkt durch Spiegelsysteme. Zweckmäßigerweise ist im Kollektor ein Rohr-und/oder Kanalsystem ausgebildet, so dass eine möglichst große katalytisch beschichtete Oberfläche ausgebildet werden kann. Auch können katalytisch beschichtete Glas- oder Kunststoffsplitter bzw. Glas- oder Kunststoffskugeln vorgesehen sein, die in die Rohre bzw. Kanäle hineinragen oder in diese hinein gegeben sind, um dadurch die insgesamt wirksame Oberfläche zu vergrößern.

Der Katalysator 10 in FIG 10 sorgt selbst für die erforderliche Wasserströmung, da aufgrund der Erwärmung des Wassers bei einfallender Sonnenstrahlung im Kollektor eine Konvektionsströmung entsteht, die Wasser aus dem Pufferspeicher 8 durch den Kollektor 10 hindurch strömen lässt, d.h. die Wasserströmung wird ausgehend von der Wassererwärmung durch die Sonnenstrahlung durch die Scherkraft angetrieben, beispielsweise entsprechend dem Prinzip einer Thermosiphonanlage.

Nach dem Kollektor 10 strömt das nunmehr gereinigte Wasser über eine Wasserleitung 11 zu einem Sauberwasserspeicher 13. Dieser ist in den Figuren nur symbolisch zu verstehen, es kann sich auch um mehrere Speicher handeln, beispielsweise einen normalen Sauberwasserspeicher als Kaltwasserspeicher und einen thermisch isolierten Sauberwasserspeicher als Warmwasserspeicher zur Speicherung von Warmwasser. Das gespeicherte Sauberwasser steht für die Wasserversorgung des Hauses 22 zur Verfügung. Dies ist in den Figuren symbolisiert durch die Wasserleitung 14, die zum bereits genannten Wasserauslass 15 führt. Insgesamt ist der Wasserkreislauf damit bis auf Entnahmen und Zuführungen an Verbrauchsstellen, beispielsweise dem Wasserauslass 15 und dem Waschbecken 5, geschlossen. Das Abwasser wird gereinigt und steht anschließend direkt wieder der Hauswasserversorgung zur Verfügung. Das dargestellte Hauswassersystem mit der erfindungsgemäßen Kleinkläranlage 1 bilden somit eine autarke, in sich abgeschlossene Insellösung, die unter anderem erheblich zur Wassereinsparung vor Ort beiträgt, was sich insbesondere in wasserarmen Regionen als besonders vorteilhaft erweist.

Im Ausführungsbeispiel nach FIG 2 ist die vorstehend beschriebene Kleinkläranlage 1 ergänzt um eine Zirkulationspumpe 16, die in die Wasserleitung 11 nach dem Kollektor 10 integriert ist und das Abwasser aus dem Pufferspeicher 8 durch den Kollektor 10 zum Sauberwasserspeicher 13 fördert. Die Zirkulationspumpe 16 ist über elektrische Anschlussleitungen 18 mit einer Photovoltaikanlage 17 verbunden, die ebenfalls auf dem Dach 12 des Hauses 22 angeordnet ist und die Pumpe 16 mit der für den Betrieb erforderlichen elektrischen Energie versorgt. Somit ist auch diese Kleinkläranlage 1 trotz Pumpe 16 autark, ein Anschluss an ein öffentliches Stromnetz ist nicht erforderlich.

Im Ausführungsbeispiel nach FIG 3 ist die vorstehend beschriebene Kleinkläranlage 1 ergänzt um einen Thermokomposter 19 zur Verrottung von Feststoffen 4. Diese Feststoffe 4 können, wie in FIG 3 dargestellt, aus der Grobstofffiltereinheit 2 stammen. In FIG 3 ist ersichtlich, dass der Thermokomposter 19 ein Thermokomposter mit Heizunterstützung ist, er wird von gereinigtem Abwasser aus dem Sauberwasserspeicher 13 durchströmt. Dieses Wasser wird in noch vergleichsweise warmem Zustand, aufgrund der Aufwärmung im Kollektor 10, über die Wasserleitung 20 dem Thermokomposter 19 zugeführt, durchströmt diesen in einem geschlossenen Rohrsystem, das eine Warmwasser-Heizeinrichtung des Thermokomposters 19 darstellt, und wird schließlich abgekühlt wieder dem Sauberwasserspeicher 13 zugeführt, über die Wasserleitung 21. Selbstverständlich ist auch jede andere Integration in den Wasserkreislauf möglich, beispielsweise direkt in die Wasserleitung 11 nach dem Kollektor 10, oder eine Warmwasserentnahme aus einem Warmwasserspeicher und eine Rückführung in einen Kaltwasserspeicher. Auf diese Weise wird die Wärme des Wassers nach dem Durchströmen des Kollektors 10 für die Erwärmung des Thermokomposters 19 und damit für die beschleunigte Verrottung der Feststoffe 4 genutzt.

Die Erfindung schlägt somit eine Kleinkläranlage und ein Hauswassersystem vor, das eine autarke, von externen Ver- und Entsorgungssystemen völlig unabhängige Insellösung für die Wasserver- und -entsorgung darstellt. Damit lassen sich auch im ländlichen Raum hygienisch einwandfrei Zustände herstellen. Ferner ermöglicht die Erfindung aufgrund der Wasseraufbereitung eine erhebliche Wassereinsparung vor Ort. Ein Anschluss an ein öffentliches Stromnetz ist ebenso wenig erforderlich wie der Anschluss an eine öffentliche Wasserversorgung und an eine öffentliche Kanalisation.

Ferner ist die erfindungsgemäße Kleinkläranlage und das erfindungsgemäße Hauswassersystem aufgrund des einfachen Aufbaus wartungsfrei bzw. zumindest wartungsarm, die Bedienung ist auch durch ungelerntes Personal möglich.

Ein modularer Aufbau des Kollektors ermöglicht eine einfache Planung und Anpassung des Kollektors an die jeweiligen Begebenheiten. Ferner wird dadurch die Installation der Anlage erheblich erleichtert.

Abschließend sei noch angemerkt, dass sich mit der erfindungsgemäßen Kleinkläranlage problemlos Wassertemperaturen des gereinigten Abwassers von mindestens 70°C erreichen lassen. Dies ist wichtig, um eine Wiederverkeimung zu vermeiden.

### Bezugszeichenliste

- 1: Kleinkläranlage
- 2: Grobstofffilter
- 3: Filtersack
- 4: Feststoffe
- 5: Waschbecken
- 6: Abwassersammelleitung
- 7: Wasserleitung
- 8: Pufferspeicher
- 9: Wasserleitung
- 10: Katalytischer Kollektor
- 11: Wasserleitung
- 12: Dach
- 13: Sauberwasserspeicher
- 14: Wasserleitung
- 15: Wasserauslass
- 16: Zirkulationspumpe
- 17: Photovoltaikanlage
- 18: Elektrische Anschlussleitungen
- 19: Thermokomposter
- 20: Wasserleitung
- 21: Wasserleitung
- 22: Haus

## Patentansprüche

1. Kleinkläranlage (1) für häusliches Abwasser, umfassend einen Pufferspeicher (8) für nicht filtriertes oder grob filtriertes häusliches Abwasser,
**dadurch gekennzeichnet, dass**
die Kleinkläranlage (1) einen photokatalytischen Kollektor (10) umfasst, wobei der photokatalytische Kollektor (10) eine oder mehrere photokatalytisch aktiv beschichtete Oberflächen aufweist, an denen das Abwasser vorbei strömt und dabei gereinigt wird.

2. Kleinkläranlage nach Anspruch 1,
**dadurch gekennzeichnet, dass**
der photokatalytische Kollektor (10) Glas- und/oder Kunststoffröhren umfasst, durch die das Abwasser strömt und deren Innenseite die photokatalytisch aktiv beschichtete Oberfläche ausbildet.

3. Kleinkläranlage nach Anspruch 1 oder 2,
**dadurch gekennzeichnet, dass**
der photokatalytische Kollektor (10) mindestens eine Glas- und/oder Kunststoffplatte umfasst, die ein Rohr- oder Kanalsystem abdeckt, durch das das Abwasser strömt, wobei die Glas- und/oder Kunststoffplatte Bestandteil des Rohr- oder Kanalsystems ist, und wobei die dem Rohr- oder Kanalsystem zugewandte Innenseite der Glas-und/oder Kunststoffplatte die photokatalytisch aktiv beschichtete Oberfläche ausbildet.

4. Kleinkläranlage nach einem der vorhergehenden Ansprüche,
**dadurch gekennzeichnet, dass**
der photokatalytische Kollektor (10) ein Rohr- oder Kanalsystem umfasst, durch das das Abwasser strömt, wobei das Rohr- oder Kanalsystem Glas- oder Kunststoffkugeln und/oder Glas- oder Kunststoffsplitter aufweist oder mit diesen gefüllt ist, die die photokatalytisch aktiv beschichtete Oberfläche ausbilden.

5. Kleinkläranlage nach einem der vorhergehenden Ansprüche,
**dadurch gekennzeichnet, dass**
der photokatalytische Kollektor (10) Spiegelsysteme zur Bündelung und/oder Konzentrierung und/oder Kanalisierung und/oder Lenkung einfallender Strahlung umfasst.

6. Kleinkläranlage nach einem der vorhergehenden Ansprüche,
**dadurch gekennzeichnet, dass**
der photokatalytische Kollektor (10) modular aus einem oder mehreren Kollektormodulen aufgebaut ist, die jeweils eine Trägerplatte aufweisen, auf der alle weiteren Kollektorkomponenten befestigt sind.

7. Kleinkläranlage nach einem der vorhergehenden Ansprüche,
**dadurch gekennzeichnet, dass**
die Kleinkläranlage (1) zusätzlich mindestens einen Sauberwasserspeicher (13), insbesondere einen Kaltwasserspeicher und/oder einen Warmwasserspeicher, umfasst.

8. Kleinkläranlage nach einem der vorhergehenden Ansprüche,
**dadurch gekennzeichnet, dass**
der photokatalytische Kollektor (10) derart angeordnet ist, dass der Fluss des Abwassers durch den photokatalytischen Kollektor (10) eine freie Konvektionsströmung ist, hervorgerufen durch die Erwärmung des in den Kollektor (10) eintretenden, grob filtrierten Abwassers durch in den photokatalytischen Kollektor (10) einfallende elektromagnetische Strahlung, insbesondere Lichtstrahlung, vorzugsweise Sonnenstrahlung.

9. Kleinkläranlage nach einem der vorhergehenden Ansprüche,
**dadurch gekennzeichnet, dass**
die Kleinkläranlage (1) mindestens eine Zirkulationspumpe (16) umfasst, die derart angeordnet ist, dass die Pumpe (16) bei Betrieb das Abwasser durch den photokatalytischen Kollektor (10) fördert.

10. Kleinkläranlage nach Anspruch 9,
**dadurch gekennzeichnet, dass**
die Kleinkläranlage (1) eine Photovoltaikanlage (17) zur Energieversorgung der Zirkulationspumpe (16) umfasst.

11. Kleinkläranlage nach einem der vorhergehenden Ansprüche,
**dadurch gekennzeichnet, dass**
die Kleinkläranlage (1) eine Grobstofffiltereinheit (2) umfasst, die dafür sorgt, dass dem photokatalytischen Kollektor (10) grob filtriertes Abwasser zugeführt wird.

12. Kleinkläranlage nach einem der vorhergehenden Ansprüche,
**dadurch gekennzeichnet, dass**
die Kleinkläranlage (10) einen Thermokomposter (19) zur Verrottung von Feststoffen (4), insbesondere von aus dem Abwasser ausfiltrierten Feststoffen, umfasst, wobei der Thermokomposter (19) eine Warmwasser-Heizeinrichtung aufweist, die von im photokatalytischen Kollektor (10) gereinigtem und erwärmtem Wasser durchströmt wird.

13. Hauswassersystem umfassend eine Kleinkläranlage (1) nach einem der vorhergehenden Ansprüche, bei dem der Wasserkreislauf bis auf eine eventuelle Wasserentnahme oder Wassereinbringung an einer oder mehreren hierfür vorgesehenen Verbrauchsstellen (5, 15) im Hauswassersystem geschlossen ist.

14. Hauswassersystem nach Anspruch 13,
bei dem erwärmtes, gereinigtes Wasser aus dem photokatalytischen Kollektor (10) in einem Warmwasserspeicher (13) gespeichert wird für die Verwendung als Warmwasser an hierfür vorgesehenen Verbrauchsstellen (15) im Hauswassersystem.
